## Europäisches Patentamt

## European Patent Office

(11) Veröffentlichungsnummer: **0 167 707**

## Office européen des brevets

**B1**

(19)

## (12) EUROPÄISCHE PATENTSCHRIFT

(45) Veröffentlichungstag der Patentschrift:
21.06.89

(21) Anmeldenummer: 85102570.0

(22) Anmeldetag: 07.03.85

(51) Int. Cl.⁴: **C 08 F 291/02,** C 08 F 279/02,
C 08 F 287/00 //
(C08F291/02, 212:08)

(54) Verfahren zur Herstellung von mit Kautschuk schlagfest modifiziertem, transluzentem Polystyrol.

(30) Priorität: 16.03.84 DE 3409656

(43) Veröffentlichungstag der Anmeldung:
15.01.86 Patentblatt 86/3

(45) Bekanntmachung des Hinweises auf die Patenterteilung:
21.06.89 Patentblatt 89/25

(84) Benannte Vertragsstaaten:
BE DE FR GB NL

(56) Entgegenhaltungen:
EP-A-0 054 144
DE-A-1 941 018
DE-A-2 613 352
FR-A-2 022 489
GB-A-1 063 603
GB-A-2 076 412
US-A-4 409 369

(73) Patentinhaber: BASF Aktiengesellschaft, Carl-Bosch- Strasse 38, D-6700 Ludwigshafen (DE)

(72) Erfinder: Hoenl, Hans, Dr., Hauptstrasse 69a,
D-6719 Obersuelzen (DE)
Erfinder: Echte, Adolf, Dr., Leuschnerstrasse 42,
D-6700 Ludwigshafen (DE)

LIBER, STOCKHOLM 1989

**Beschreibung**

Die Erfindung betrifft ein Verfahren zur Herstellung von schlagfestem und zugleich transluzentem Polystyrol durch radikalische Polymerisation.

Zum Stand der Technik nennen wir:

(1) DE-OS-1 769 118
(2) EP-0 021 488
(3) DE-AS-2 613 352 und
(4) DE-OS-3 047 303

In (1) bzw. (2) ist die Herstellung von schlagfestem, nichttransluzentem Polystyrol beschrieben. Verwendet werden zur Herstellung dieser Produkte Mischungen aus Polybutadien und Styrol-Butadien-Blockcopolymerisaten. Nach dem in (3) beschriebenen Verfahren werden auf diskontinuierlichem Wege unter Verwendung von Styrol-Butadien-Blockcopolymerisaten transluzente, schlagfeste Polystyrole erhalten. Das in (4) beschriebene Verfahren wird kontinuierlich und unter Verwendung von Polybutadien und von Radikalinitiatoren durchgeführt, wobei in der 1. Reaktionszone eine Verweilzeit der Reaktanten von kleiner als 35 Minuten bei Anwendung pfropfaktiver Radikalinitiatoren erforderlich ist. Das bekannte Verfahren ergibt bei Verwendung von Polybutadien transluzente Produkte.

Die sogenannten Styrol-Butadienblockkautschuke sind teurer als Polybutadienkautschuke. Es bestand daher die Aufgabe, die teureren Blockkautschuke mit Polybutadien zu verschneiden, ohne Einbußen an Transluzenz hinnehmen zu müssen. Bei Verwendung von Mischungen aus Polybutadienkautschuken und Blockkautschuken war zu erwarten, daß die Transluzenz schon bei sehr geringen Gehalten an Polybutadien in der Mischung abnehmen würde; dies wird u. a. durch die in der vorliegenden Anmeldung enthaltenden Vergleichsversuche bestätigt. Überraschend wurde jedoch gefunden, daß es gelingt, bei einem Verfahren, das unter Verwendung von Pfropfaktiven Initiatoren durchgeführt wird, Styrol-Butadienblockkautschuke mit 5 bis 50 Gew.-% Polybutadien in Mischung zu polymerisieren, ohne daß man einen Abfall der Transluzenz zu befürchten hat.

Die Aufgabe wird gelöst durch ein Verfahren gemäß Patentanspruch 1.

Die vorliegende Erfindung betrifft somit ein Verfahren zur Herstellung von mit Kautschuk schlagfest modifiziertem Polystyrol

wobei man einen Reaktionsansatz, der enthält (besteht aus)

$a_1$) Styrol,
$a_2$) mindestens ein kautschukartiges Polymerisat, in einem Anteil an 3 bis 30 Gew.-%, bezogen auf Styrol, und berechnet als Polybutadien,
$a_3$) gegebenenfalls ein(em) Lösungsmittel und/oder ein(em) Mineralöl,
in Gegenwart von

a) pfropfaktiven peroxidischen Radikalinitiatoren und von
b) Mercaptanen

bei erhöhter Temperatur
in mindestens 2 isotherm beschriebenen Verfahrensstufen unter Rühren (Scherung) in an sich bekannter Weise so polymerisiert, daß danach die im Polystyrol dispergierte Weichphase einen mittleren Teilchendruchmesser im Bereich von 0,02 bis 0,9 µm aufweist, und das schlagfeste Polystyrol in an sich bekannter Weise gewinnt. Dieses Verfahren ist dadurch gekennzeichnet, daß als kautschukartiges Polymerisat $a_2$) eine Mischung aus Polybutadien und einem linearen Butadien-Styrol-Zweiblockcopolymerisat mit verschmiertem Übergang verwendet wird, wobei der Anteil an Polybutadien aus dem Homopolymerisat 5 bis 50 Gew.-%, bezogen auf die Summe aus Polybutadien aus Homopolymerisat und linearem Butadien-Styrol-Zweiblockcopolymerisat (Gesamtpolybutadien), ausmacht.

Nachstehend werden das erfindungsgemäße Verfahren und die zu seiner Durchführung erforderlichen Ausgangsstoffe beschrieben.

Verfahren zur Herstellung von schlagfestem Polystyrol, sei es kontinuierlich oder diskontinuierich, sind aus (1), (2) oder der DE-AS-1 770 392 hinreichend bekannt. Dasselbe gilt für Verfahren zur Herstellung von schlagfestem und zugleich transluzentem Polystyrol; solche Verfahren sind in den unter (3) bzw. (4) genannten Druckschriften beschrieben. Das erfindungsgemäße Verfahren kann in Anlehnung an die bekannten Verfahren diskontinuierlich und kontinuierlich in mindestens 2 Verfahrensstufen durchgeführt werden. Dabei wird vorzugsweise in der ersten Verfahrensstufe die in Styrol gelöste Kautschukmischung $a_2$) unter Einwirkung von Scherkräften in der dem Fachmann bekannten Weise vorpolymerisiert bis zum Abschluß der Phaseninversion; d. h. in dieser ersten Verfahrensstufe wird vorzugsweise ausschließlich in Masse, weniger bevorzugt in Gegenwart eines Lösungsmittels, polymerisiert.

Zur Durchführung der Polymerisation wird dabei ein Reaktionsansatz verwendet, der enthält $a_1$) Styrol, $a_2$) mindestens ein kautschukartiges Polymerisat und $a_3$) ggf. ein Lösungsmittel und ein vorzugsweise schon bei der Polymerisation anwesendes Mineralöl, insbesondere ein Weißöl, d. h. ein aromatenarmes technisches Weißöl bzw. ein aromatenfreies medizinisches Weißöl; letzteres insbesondere, wenn die Formteile den

2

lebensmittelrechtlichen Bedingungen im Verpackungssektor genügen müssen. Der Reaktionsansatz besteht vorzugsweise aus $a_1$), $a_2$) und falls angewendet $a_3$).

Das kautschukartige Polymerisat $a_2$) wird in einem Anteil von 3 bis 30 Gew.-%, vorzugsweise von 4 bis 14 Gew.-%, insbesondere im Bereich von 6 bis 12 Gew.-%, bezogen auf Styrol und berechnet als Polybutadien, angewendet. Als Monomeres $a_1$) kommt für den vorliegenden Verwendungzweck ausschließlich das billigere Styrol, weniger bevorzugt sind Mischungen von Styrol mit $\alpha$-Methylstyrol bzw. p-Methylstyrol, in Frage. Das Ergebnis der Polymerisation des Reaktiosansatzes ist dann ein Pfropfmischpolymerisat von Styrol auf das kautschukartige Polymerisat, das die spätere Weichphase bildet, die in Form von Kapselteilchen mit einem mittleren Teilchendurchmesser (Zahlenmittel) im Bereich von 0,1 bis 0,5 µm in der Hartmatrix Polystyrol dispergiert ist.

Als kautschukartiges Polymerisat $a_2$) im Sinne der erfindungsgemäßen Verfahrens kommt ein Gemisch aus Polybutadien und linearen Styrolbutadien-Zwei-Blockcopolymerisaten in Betracht. Als Polybutadiene geeignet sind diejenigen vom medium- oder high-cis-Typ mit Molekulargewichten im Bereich von 70 000 bis 350 000 (Gewichtsmittel) vorzugsweise werden medium-cis-Polybutadiene eingesetzt. Als Styrol-Butadien-Zwei-Blockcopolymerisate kommen die durch anionische Polymerisation mit Lithiuminitiatoren hergestellten, Blockcopolymerisate mit sogenanntem verschmiertem Übergang in Frage, die durch Polymerisation einer Mischung der Monomeren Butadien und Styrol in Abwesenheit von Randomizern hergestellt werden. Die Verfahren zur Herstellung dieser linearen Zwei-Blockcopolymerisate sind dem Fachmann bekannt. Der Polybutadienanteil dieser linearen Zwei-Blockpolymerisate liegt im Bereich von 50 bis 70 Gew.-%, vorzugsweise beträgt er 55 bis 65 Gew.-% und insbesondere 58 bis 62 Gew.-%. Der Anteil an Styrol beträgt dementsprechend 50 bis 30 Gew.-%, vorzugsweise 45 bis 35 Gew.-% und insbesondere 42 bis 38 Gew.-%. Da ein bestimmter Anteil des Styrols entlang des Blockcopolymerisates verschmiert in dem Polybutadiensegment vorliegt, soll der Anteil an Blockpolystyrol des Zweiblockcopolymerisates im Bereich von 25 bis 45 %, bevorzugt im Bereich von 30 bis 32 Gew.-% liegen. Wesentlich für das erfindungsgemäße Verfahren, d.h. für die Lösung der Aufgabe ist nun, daß der Anteil an Polybutadien in einem bestimmten Bereich gehalten werden muß, damit die bei ausschließlicher Verwendung von Blockcopolymerisaten bekannte gute Transluzenz nicht drastisch verschlechtert wird. Wenn man Mischungen aus Polybutadien und Styrolbutadien-Zwei-Blockcopolymerisaten verwendet, so berechnet sich der Gesamtpolybutadienanteil aus dem Anteil des Polybutadiens und aus dem Butadienanteil der in dem Zwei-Blockcopolymerisat enthalten ist.

Um dies zu verdeutlichen, sei ein Beispiel angeführt. Eine Mischung aus 8 Gew.-% Styrol-Butadienblockcopolymerisat mit einem Butadiengehalt von 50 Gew.-% und 6 Gew.-% Polybutadien wird angewendet. Der Gesamtpolybutadienanteil beträgt dann 8 mal 0,5 = 4 Gew.-% Polybutadien aus dem Zwei-Blockcopolymerisat und 6 Gew.-% aus dem Homopolymerisat des Butadiens, so daß der Gesamtpolybutadienanteil 10 Gew.-% ausmacht. Der Anteil des Polybutadiens am Gesamtpolybutadien ist 6/10 = 60 %. Soweit die Erläuterung des Gesamtpolybutadiengehalts, wie sie erfindungsgemäß zu verstehen ist.

Im erfindungsgemäßen Verfahren beträgt der Anteil an Polybutadien aus dem Homopolymerisat 5 bis 50 Gew.-%, vorzugsweise 10 bis 40 Gew.-%, bezogen auf Gesamtpolybutadien im Sinne der vorstehenden Erläuterung, d. h. unter Gesamtpolybutadiengehalt ist die Summe aus dem Polybutadien des Homopolymerisats und dem Butadiengehalt des linearen verschmierten zwei-Blockcopolymerisates zu verstehen. Werden mehr als 50 Gew.-%, z. B. 60 Gew.-%, Polybutadien, bezogen auf Gesamtpolybutadien, verwendet, so fällt die Transluzens merklich ab. Die untere Grenze des Polybutadiens ist nicht kritisch, geringe Polybutadiengehalte verteuern lediglich das Endprodukt.

Als Lösungsmittel $a_3$), die ggf. angewendet werden können, kommen beispielsweise in Betracht Toluol, Xylol, Ethylbenzol, Methylethylketon und dgl. Die genannten Lösungsmittel werden in Mengen von 2 bis 25 Gew.-%, bezogen auf Styrol, angewendet. Bevorzugt wird, falls überhaupt ein Lösungsmittel angewendet wird, Ethylbenzol verwendet.

Als pfropfaktive peroxidisch Radikalinitiatoren b) kommen insbesondere Initiatoren aus der Gruppe der Alkyl- oder Acylperoxide, der Hydroperoxide sowie der Perester und der Peroxicarbonate in Betracht. Vorzugsweise werden die pfropfaktiven Initiatoren Dibenzoylperoxid, tert.-Butyl-peroxi-2-ethylhexanoat oder das tert.-Butylperbenzoat angewendet. Die Initiatoren werden in Mengen von 0,05 bis 0,5 Gew.-%, bezogen auf Styrol, angewendet. Die Anwendung von Initiatoren ist dem Fachmann bekannt, es ist ihm außerdem bekannt, den Zerfall von Initiatoren entweder durch gewisse Zusätze wie Amine, oder aber durch Wahl geeigneter Temperaturintervalle zu beschleunigen, um die Pfropfaktivität zu erhöhen.

Als Kettenüberträger c) kommen die üblicherweise verwendeten Mercaptane mit 4 bis 18 C-Atomen in Betracht. Von den genannten Mercaptanen haben sich besonders das n-Butylmercaptan, das n-Octylmercaptan sowie das n- oder t.-Dodecylmercaptan bewährt. Diese Mercaptane werden in Mengen von 0,01 bis 0,3 Gew.-%, bezogen auf Styrol, angewendet.

Das erfindungsgemäße Verfahren wird bei erhöhter Temperatur durchgeführt. Unter erhöhter Temperatur im Sinne des erfindungsgemäßen Verfahrens werden Temperaturen im Bereich von 50 bis 200°C, insbesondere im Bereich von 60 bis 150°C verstanden. Der Fachmann weiß, wie er bei bestimmter Verfahrensführung aus dem genannten Temperaturintervall die für die einzelnen Verfahrensstufen erforderlichen Temperaturen bei Verwendung bestimmter Initiatoren oder bei der Zielrichtung bestimmte Produkte herzustellen, auszuwählen hat.

Das erfindungsgemäße Verfahren wird in mindestens 2 Verfahrensstufen durchgeführt, die jeweils isotherm betrieben werden. Das Verfahren kann demgemäß in Verfahrensstufen, die mit Reaktoren unterschiedlicher Bauart ausgestattet sind, wie Rührkesselreaktoren, Turm- oder Röhrenrraktoren durchgeführt werden. Es kann kontinuierlich und diskontinuierlich betrieben werden.

Wird das erfindungsgemäße Verfahren diskontinuierlich betrieben, dann wird es in 2 hintereinandergeschalteten Rührkesselreaktoren durchgeführt, wobei wiederum vorzugsweise in dem 1. Reaktor in Masse und in dem 2. Reaktor in Suspension polymerisiert wird. Zur Durchführung des erfindungsgemäßen Verfahrens wird zunächst aus Styrol und der Mischung der Kautschuke a₂), nämlich aus Polybutadien und linearem Zwei-Blockcopolymerisat, ggf. unter Zuhilfenahme eines Lösungsmittels, und einem Mineralöl ein Reaktionsansatz hergestellt; bevorzugt ist der Reaktionsansatz somit eine Lösung der Kautschuke im wesentlichen in Styrol. Diesem Reaktionsansatz wird das Peroxid und das Mercaptan, (Kettenregler) zugegeben, wobei der Kettenregler, je nach dem gewünschten Produkt nicht von Anfang an zugegeben zu sein braucht; er kann auch später zugegeben werden.

Die genannte Lösung wird dann polymerisiert, wobei sich nach einem bestimmten Umsatz 2 Phasen bilden, nämlich eine kohärente Kautschuk-Styrol-Phase und eine nicht kohärente Polystyrol-Styrol-phase. Nach Steigerung des Umsatzes tritt eine Phaseninversion ein. Diese Vorgänge spielen sich auch bei Gegenwart eines Lösungsmittels ab.

Nach erfolgter Phaseninversion muß durch geeignete, dem Fachmann bekannt Scherbedingungen, die jeweils angestrebte mittlere Teilchengröße, die im Bereich von 0,05 bis ca. 0,9 oder vorzugsweise im Bereich von 0,1 bis 0,5 µm ausgewählt wird, in dieser Verfahrensstufe eingestellt werden. Die hierfür erforderlichen Scherbedingungen aufgrund der gegebenen Reaktorgröße, Füllgrad, Art der Füllung (Viskosität) und Art des Rührorgans etc. kann der Fachmann anhand weniger Versuche festlegen.

Nach Umsätzen im Bereich von 20 bis 40, vorzugsweise 25 bis 35 Gew.-%, bezogen auf Styrol, wird die 1. Verfahrensstufe beendet. Dem nach der 1. Verfahrensstufe erhaltenen Reaktionsprodukt werden übliche wasserlösliche Suspensionshilfsmittel zugesetzt, die aus der Gruppe Methylcellulose, Oxipropylcellulose, Polyvinylalkohol, Polyvinylpyrrolidon usw. oder aus der Gruppe der anorganischen Dispersionsmittel, wie Bariumsulfat etc. ausgewählt werden können. Dem Reaktionsprodukt wird dann eine dem Fachmann bekannte Menge Wasser zugesetzt; danach wird in wäßriger Suspension isotherm weiterpolymerisiert, wobei verschiedene Temperaturpegel ängewendet werden können, die aus einem breiten Bereich ausgewählt werden können. In der 2. Verfahrensstufe, die vorzugsweise in Suspension geführt wird, wird bis zu Umsätzen von 90 bis 100 Gew.-%, bezogen auf Styrol, polymerisiert. Im Anschluß daran wird das Reaktionsprodukt in üblicher Weise gewonnen. Dies kann z. B. in einer Entgasungszone geschehen, in der das Reaktionsprodukt von überschüssigem Styrol und ggf. von Lösungsmittel befreit wird. Die zu wählende Temperatur für diese Aufarbeitungsstufen, sind dem Fachmann geläufig.

Die nach dem erfindungsgemäßen Verfahren erhaltenen schlagfesten und transluzenten Polystyrole können nach den für Thermoplaste bekannten Verfahren verarbeitet werden, also z. B. durch Extrudieren, Spritzgießen, Kalandrieren, Hohlkörperblasen, Pressen oder Sintern. Besonders bevorzugt werden aus dem nach dem erfindungsgemäßen Verfahren hergestellten Produkten geformte Gebilde durch Spritzgießen hergestellt. Insbesondere eignen sich die erfindungsgemäßen Produkte zur Herstellung von Folien für den Verpackungssektor, insbesondere auch für Nahrungsmittel.

Die von Proben der in den Beispielen und Vergleichsversuchen erhaltenen Produkte aufgeführten Eigenschaften wurden wie folgt gemessen.

1. Die Viskositätszahl, VZ, der Hartmatrix in ml/g wurde analog DIN 53 724 bestimmt.

2. Die Lochkerbschlagzähigkeit, $a_{kl}$, in $(kJ/m^2)$ wird nach dem DIN-Entwurf auf Beschluß des Fachnormenausschusses Kunststoffe 4.3 vom März 1975, in Vorbereitung, bestimmt.

3. Zur Bewertung der Transluzenz der beim erfindungsgemäßen Verfahren erhaltenen Produkte werden zunächst eine Skala erstellt. Diese Skale umfaßt die Werte 1 bis 9 in der folgenden Tabelle 1, wobei die niedrigeren Werte eine gute Transluzenz repräsentieren. Um die in der Tabelle 1 angeführten Werte zu erzielen, wurde ein handelsübliches schlagfestes Polystyrol (Produkt A), das 15 Gew.-% eines Styrol-Butadien-Blockkautschuks mit Kapselteilchenmorphologie (Typ Buna BL 6533) mit 60 Gew.-% Butadien enthielt, zugrundegelegt (Benotung 4). Abmischungen dieses Produktes A in den in der Tabelle 1 genannten Gewichtsverhältnissen mit Standardpolystyrol der VZ 96 [ml/g] ergaben die Werte von 3 bis 1 für die Transluzenz. Durch Abmischung des genannten Standardpolystyrols mit einem schlagfesten Polystyrol mit Zellenteilchenmorphologie (Produkt B) (Handelsprodukt (thermisch hergestellt)), das 8 Gew.-% Polybutadien enthält, wurden höhere Werte der Transluzenz erzielt; vgl. die Werte 5 bis 9 in der Tabelle.

Von Proben der erfindungsgemäßen Produkte der Beispiele und der Vergleichsversuche wurden Preßplättchen hergestellt und visuell mit den entsprechenden Preßblättchen der Standards der Skala verglichen.

**Tabelle 1**

| Note für die Transluzenz | Produkt A | Abmischung in Gew.-Teilchen Standardpolvstyrol | Produkt B |
|---|---|---|---|
| 1 | 20 | 80 | 0 |
| 2 | 40 | 60 | 0 |
| 3 | 60 | 40 | 0 |
| 4 | 100 | 0 | 0 |
| 5 | 96 | 0 | 4 |
| 6 | 92 | 0 | 8 |
| 7 | 88 | 0 | 12 |
| 8 | 84 | 0 | 16 |
| 9 | 80 | 0 | 20 |

4. Von den Proben der Beispiele und Versuche wurden in bekannter Weise elektronenmikroskopische Dünnschichtaufnahmen angefertigt, die zur Bestimmung der Teilchengröße der Weichphase dienen.

Die Erfindung wird nachstehend anhand von Beispielen und Vergleichsversuchen näher erläutert. Alle darin angegebenen Teile und Prozente beziehen sich, sofern nichts anderes vermerkt ist, auf das Gewicht.

**Beispiele 1 bis 5**

Den in der Tabelle 2 angegebenen Mengen an Styrol und Elastomeren (Polybutadien und lineares Styrol-Butadienblockcopolymerisat) wurden jeweils noch 2,3 Gew.-% eines medizinischen Weißöles zugesetzt [Summe $a_1$) bis $a_3$) ] = 100]. Außerdem wurden dem Reaktionsansatz zusätzlich noch 0,12 Teile eines sterisch gehinderten Phenoles als Stabilisator (®Irganox 1076) und 0,06 Teile t.-Dodecylmercaptan als Kettenregler sowie jeweils 0,1 Teile Dibenzoylperoxid als Starter zugefügt.

In einem mit einem Anker-Rührer ausgestatteten Kessel mit einem Fassungsvermögen von 5 Liter wurden die in der Tabelle 2 genannten Ausgangsmischungen jeweils bei 86°C isotherm und bei 400 Rührerumdrehungen/Minute bis zu einem Umsatz von 33 Gew.-% bezogen auf Styrol, d.h. in Masse, polymerisiert. Danach wird in wäßriger Suspension weiterpolymerisiert. Hierzu werden 0,1 Teile Dicumylperoxid und pro Kilogramm des Ansatzes 900 al Wasser, 9,0 g eines Suspensionshilfsmittels auf Basis von Ethylenoxid (®Luviskol K 90) 1,8 g Natriumphosphat zugegeben. In Suspension wurde bei einem Füllgrad von 90 % bei 300 Rührerumdrehungen pro Minute jeweils isotherm 3 Stunden bei 110°C, 3 Stunden bei 130°C und 4 Stunden bei 140°C bis zu einem Umsatz von 100 %, bezogen auf Styrol, polymerisiert. Die dabei erhaltenen Produkte besaßen eine in Polystyrol als Hartmatrix eingebettete feinverteilte Weichphase aus gepfropftem Styrol auf die Mischung der Elastomeren mit Kapselteilchenmorphologie bei einer mittleren Teilchengröße von 0,3 Mikrometer. Der Versuch 1 wurde nur mit Blockkautschuk durchgeführt. Versuch 6 ist nicht erfindungsgemäß; er zeigt den drastischen Abfall der Transluzenz bei hohem Polybutadiengehalt (60 %).

**Vergleichsversuche 7 bis 12**

Die Vergleichsversuche wurden, wie vorstehend in den Beispielen beschrieben, durchgeführt, mit der Ausnahme, daß kein Dibenzoylperoxid in der 1. Verfahrensstufe zugesetzt wurde.

An Proben der nach dem erfindungsgemäßen Verfahren und der nach den Vergleichsversuchen erhaltenen Produkte wurden die Viskositätszahl, d. h. das Molekulargewicht der Hartmatrix, die Lochkerbschlagzähigkeit und die Transluzenz bestimmt.

In die Tabelle sind ebenfalls Werte von Produkten mit aufgenommen, die unter Verwendung eines linearen Styrol-Butadienblockcopolymerisates mit verschmiertem Übergang mit (Versuch 1) und ohne Starter (Versuch 7) hergestellt worden waren. Diese Produkte dienen lediglich als Modell für die gute Transluzenz. Sie sind jeweils an erster Stelle in der Tabelle vor den Beispielen bzw. Vergleichsversuchen aufgeführt. Die in der Tabelle 2 für die Vergleichsversuche 8 bis 13 angegebenen Werte für die Transluzenz zeigen das erwartete Bild, d. h. bei der thermischen Polymerisation von Mischungen aus Polybutadien und linearen Blockcopolymerisaten nimmt die Transluzenz von 3,5 stetig mit wachsendem Polybutadienanteil bis auf Werte von 9,0 bei Versuch 13 ab. Überraschend wird bei der Polymerisation von Mischungen nach dem erfindungsgemäßen Verfahren die Transluzenz des linearen Blockcopolymerisates bis zu Werten von 50 Gew.-% Polybutadien, bezogen auf Gesamtpolybutadien, auf dem guten Niveau gehalten. Erst danach, bei ca. 55 %, fällt die Transluzenz drastisch ab (Wert von 4,0 bei Versuch Nr. 6). Zusammenfassend kann festgestellt werden, daß es für den Fachmann überraschend war, daß er bei Verwendung von pfropfaktiven Initiatoren und unter Verwendung einer Mischung aus Polybutadien und linearen Styrol-Butadien-Zwei-Blockcopolymerisaten Produkte mit guter Kerbschlagzähigkeit erhalten konnte, die die nur bei dusschließlicher Verwendung von Blockcopolymerisaten bekannten guten Transluzenzwerte aufweisen.

5

**Tabelle 2**

| Beispiel/<br>Versuch | %<br>Styrol | %<br>Polybuta-<br>dien | %<br>SB-Block-Cop.* | %<br>Polybutadien,<br>bezogen auf<br>Gesamt-Poly-<br>butadien | Teile<br>DBPO | VZ<br>(ml/g) | $a_{kl}$<br>$(kJm^2)$ | Trans-<br>luzenz |
|---|---|---|---|---|---|---|---|---|
| Versuch 1 (nicht<br>erfindungsgemäß) | 82,7 | 0 | 15,0 | 0 | 0,15 | 80 | 8,7 | 2,0 |
| 1 | 83,3 | 0,9 | 13,5 | 10 | 0,15 | 81 | 9,0 | 2,0 |
| 2 | 83,9 | 1,8 | 12,0 | 20 | 0,15 | 83 | 9,0 | 2,0 |
| 3 | 84,5 | 2,7 | 10,5 | 30 | 0,15 | 83 | 10,7 | 2,0 |
| 4 | 85,1 | 3,6 | 9,0 | 40 | 0,15 | 81 | 8,9 | 2,0 |
| 5 | 85,7 | 4,5 | 7,5 | 50 | 0,15 | 82 | 8,0 | 2,5 |
| 6 (nicht erf.) | 86,3 | 5,4 | 6,0 | 60 | 0,15 | 81 | 7,3 | 4,0 |
| Vergleichsversuch/<br>Versuch | | | | | | | | |
| Versuch 7 | 82,7 | 0 | 15,0 | 0 | 0 | 77 | 6,9 | 3,0 |
| 8 | 83,3 | 0,9 | 13,5 | 10 | 0 | 78 | 6,0 | 3,5 |
| 9 | 83,9 | 1,8 | 12,0 | 20 | 0 | 78 | 6,1 | 4,5 |
| 10 | 84,5 | 2,7 | 10,5 | 30 | 0 | 81 | 6,5 | 5,0 |
| 11 | 85,1 | 3,6 | 9,0 | 40 | 0 | 78 | 6,3 | 6,5 |
| 12 | 85,7 | 4,5 | 7,5 | 50 | 0 | 76 | 4,9 | 8,0 |
| 13 | 86,3 | 5,4 | 6,0 | 60 | 0 | 78 | 10,0 | 9,0 |

* das lineare Styrol-Butadien-Zwei-Blockpolymerisat enthfelt 60 Gew.-% Butadien und 40 Gew.-% Styrol, wovon 32 Gew.-% als Blockpolystyrol vorlagen.

**Patentansprüche**

1. Verfahren zur Herstellung von mit Kautschuk schlagfest modifiziertem transluzyntem Polystyrol, wobei man einen Reaktionsansatz, der enthält

$a_1$) Styrol,
$a_2$) eine Mischung aus Polybutadien und einem linearen Butadien-Styrol-Zwei-Blockcopolymerisat mit verschmiertem Übergang, wobei der Anteil an Polybutadien aus dem Homopolymerisat 5 bis 50 Gew.-%, bezogen auf Gesamtpolybutadien, ausmacht und der anteil des Kautschuks 3 bis 30 Gew.-%, bezogen auf Styrol, und berechnet als Polybutadien, ausmacht.
$a_3$) gegebenenfalls ein Lösungsmittel und/oder ein Mineralöl,
in Gegenwart von
b) Radikalinitiatoren aus der Gruppe von Dibenzoylperoxid, tert.-Butylperoxi-2-ethylhexanoat und tert.-Butylperbenzoat
c) Mercaptanen
bei Temperaturen von 60 bis 150°C
in mindestens 2 isotherm betriebenen Verfahrensstufen unter Rühren (Scherung) in an sich bekannter Weise polymerisiert und das schlagfeste Polystyrol in an sich bekannter weise gewinnt, dadurch gekennzeichnet, daß die Polymerisation in Gegenwart von pfropfaktiven peroxidischen Radikalinitiatoren aus der Gruppe von Dibenzoylperoxid, tert.-Butylperoxi-2-ethylhyxanoat und tert.-Butylperbenzoat, so durchgeführt wird, daß die im Polystyrol dispergierte Weichphase einen mittleren Teilchendurchmesser im Bereich von 0,1 bis 0,5 μm aufweist.

2. Verfahren nach Anspruch 1, dadurch gekennzeichnet, daß der Anteil an Polybutadien 10 bis 40 Gew.-%, bezogen auf Gesamtpolybutadien, beträgt.

3. Verfahren nach Anspruch 1, dadurch gekennzeichnet, daß das lineare Zwei-Blockcopolymerisat zu 50 bis 70 Gew.-% aus Butadien und zu 50 bis 30 Gew.-% aus Styrol besteht, wobei der Blockpolystyrolanteil in diesem Copolymerisat 25 bis 45 Gew.-% ausmacht.

4. Verwendung von Verfahrensprodukten gemäß Anspruch 1 zur Herstellung von geformten Gebilden.

5. Geformte Gebilde aus Verfahrensprodukten gemäß Anspruch 1.

**Claims**

1. A process for preparing a translucent polystyrene rendered impact-resistant by modification with a rubber by polymerizing a reaction batch containing

a₁) styrene

a₂) a mixture of polybutadiene and a linear butadienestyrene two-block copolymer with a tapered transition, the proportion of polybutadiene from the homopolymer amounting to from 5 to 50 % by weight, based on total butadiene, and a proportion of rubber amounting to from 3 to 50 % by weight, based on styrene, calculated as polybutadiene,

a₃) optionally a solvent and/or a mineral oil, in the presence of

b) a free radical initiator from the group consisting of dibenzoyl peroxide, tert-butyl peroxy-2-ethylhexanoate and tert-butyl perbenzoate, and

c) a mercaptan

at from 60 to 150°C

in a conventional manner by stirring (shearing) in 2 or more isothermally operated stages and isolating the impact-resistant polystyrene in a conventional manner, which comprises performing the polymerization in the presence of a grafting-active peroxidic free radical initiator from the group consisting of dibenzoyl peroxide, tertbutyl peroxy-2-ethylhexanoate and tert-butyl perbenzoate in such a way that the soft phase dispersed in the polystyrene has an average particle diameter within the range from 0.1 to 0.5 µm.

2. A process as claimed in claim 1, wherein the proportion of polybutadiene is from 10 to 40 % by weight, based on total polybutadiene.

3. A process as claimed in claim 1, wherein the linear two-block polymer is from 50 to 70 % by weight butadiene and from 50 to 30 % by weight styrene, the block polystyrene proportion in this copolymer amounting to from 25 to 45 % by weight.

4. The use of a product as prepared in claim 1 for producing a shaped structure.

5. A shaped structure from a product as prepared in claim 1.


**Revendications**

1. Procédé de preparation de polystyrène translucide à résistance aux chocs modifiée par du caoutchouc, caractérisé en ce qu'on polymérise d'une façon connue en soi une charge réactionnelle qui contient

a₁) du styrène

a₂) un mélange de polybutadiène et d'un copolymère biséquencé linéaire butadiène/styrène à transition dite non franche, la portion polybutadiène due à l'homopolymère étant de 5 à 50 % en poids par rapport au polybutadiène total et la portion caoutchouc étant de 3 à 30 % en poids par rapport au styrène, calculée en polybutadiène,

a₃) éventuellement un solvant et/ou une huile minérale,

en présence

b) d'initiateurs radicalaires du groupe du peroxyde de dibenzoyle, du peroxy-2-éthylhexanoate de tert-butyle et du perbenzoate de tert-butyle, et

c) de mercaptans

à une température de 60 à 150°C, selon au moins deux étapes de preparation conduites de façon isotherme, et on obtient le polystyrène résistant aux chocs de façon connue en soi,

caractérisé en ce que l'on effectue la polymérisation en presence d'initiateurs radicalaires peroxydés actifs pour le greffage du groupe du peroxyde de dibenzoyle, du peroxy-2-éthylhexanoate de tert-butyle et du perbenzoate de tert-butyle, de telle sorte que la phase molle dispersée dans le polystyrène présente un diamètre moyen de particules de 0,1 à 0,5 µm.

2. Procédé selon la revendication 1, caractérisé en ce que la portion polybutadiène représente 10 à 40 % en poids par rapport au polybutadiène total.

3. Procédé selon la revendication 1, caractérisé en ce que le copolymère biséquencè linéaire contient jusqu'à 50 a 70 % en poids de butadiène et jusqu'à 50 à 30 % en poids de styrène, la portion polystyrène séquencé dans la copolymère représentant alors de 25 à 45 % en poids.

4. Utilisation des produits obtenus par le procédé selon la revendication 1 pour la préparation d'objets moulés.

5. Objets moulés à partir des produits obtenus par le procédé selon la revendication 1.